# EUROPÄISCHE PATENTSCHRIFT

(11) **EP 4 421 253 B1**
(45) Veröffentlichungstag und Bekanntmachung des Hinweises auf die Patenterteilung: **04.11.2026**
(21) Anmeldenummer: 23158779.1
(22) Anmeldetag: 27.02.2023
(51) Int. Cl.: E03C 1/05

(54) **SANITÄRTECHNIKDIAGNOSESYSTEM**
SANITARY TECHNOLOGY DIAGNOSTIC SYSTEM
SYSTÈME DE DIAGNOSTIC DE TECHNIQUE SANITAIRE

(43) Veröffentlichungstag der Anmeldung: 28.08.2024
(73) Patentinhaber: Geberit International AG, 8645 Jona (CH)
(72) Erfinder: Walch, Christoph, 8004 Zürich (CH)
(74) Vertreter: Gulde & Partner

(56) Entgegenhaltungen:
- WO-A1-2020/028798
- WO-A1-2022/251105

## Beschreibung

Die vorliegende Erfindung betrifft ein Sanitärtechnikdiagnosesystem umfassend wenigstens eine Sanitäreinrichtung, eine Nutzereinrichtung, eine Servereinrichtung sowie eine Diagnoseeinrichtung. Gegenstand der vorliegenden Erfindung ist ferner ein dazu korrespondierendes Sanitärtechnikdiagnoseverfahren.

Aus dem Stand der Technik sind Sanitäreinrichtungen wie Toiletten, Urinale, Waschtischarmaturen, Hygienespülungen und dergleichen bekannt, welche eine erweiterte Funktionalität bieten und Nutzern beispielsweise ermöglichen, diese hinsichtlich zu verwendender Betriebsparameter zu konfigurieren. Aufgrund von beispielsweise falsch vorgenommenen Konfigurationen kann es zu einem gestörten Betrieb der Einrichtungen kommen. In einem solchen Fall sind Nutzer häufig nicht in der Lage, ein vorhandenes Problem selbst zu identifizieren und zu beheben. Daher sind Nutzer auf externe Unterstützung, beispielsweise durch Kundendienstmitarbeiter, angewiesen.

Eine derartige Unterstützung erfolgt bisher im Wesentlichen auf telefonischem Wege, so dass es für Kundendienstmitarbeiter mitunter schwierig ist, die von einem Nutzer tatsächlich verwendete Einrichtung zweifelsfrei zu identifizieren respektive die Ursache für einen möglichen Defekt oder eine falsche Einstellung zu identifizieren. Dies ist dadurch begründet, dass sich viele Produkte optisch stark ähneln, obschon sich ihre Funktionalität mitunter erheblich voneinander unterscheidet kann und der Kunde das Problem nicht genau beschreiben kann. Aus diesem Grund kann es zu einer unzutreffenden Identifikation des verwendeten Produkts oder des Fehlers durch Nutzer kommen, so dass eine Problembehebung fehlschlägt. Kundendienstmitarbeiter müssen dann vor Ort beim Nutzer einer Problemidentifizierung und -lösung nachgehen, wodurch hohe Kosten entstehen.

Die WO 2022/251105 A1 betrifft ein verbundenes Armaturensystem umfassend eine Vielzahl von Armaturen, wobei jede Armatur mit einem Anwesenheitssensor, einem Magnetventil, einem Durchflussmesser und einem Steuergerät verbunden ist, wobei der Anwesenheitssensor, das Magnetventil und der Durchflussmesser in elektrischer Verbindung mit dem Steuergerät stehen. Das Armaturensystem umfasst ferner ein Steuersystem, welches die Steuergeräte und eine Rechenvorrichtung umfasst, wobei die Steuergeräte dazu eingerichtet sind, direkt und/oder über ein Gateway mit der Rechenvorrichtung kommunizieren, wobei das Steuersystem eingerichtet ist, dass es Daten von den Anwesenheitssensoren und den Durchflussmessern sammelt, und auf Grundlage dieser Daten einen Status jeder Armatur bestimmt, auf dessen Basis es eine Aktion einleitet.

Vor diesem Hintergrund liegt der vorliegenden Erfindung die Aufgabe zugrunde, eine Lösung bereitzustellen, welche es Kundendienstmitarbeitern ermöglicht, von Problemen betroffene Sanitäreinrichtungen eines Nutzers schnell und zweifelsfrei identifizieren zu können, selbst wenn vom Nutzer selbst identifizierte Informationen oder Fehlerbeschreibungen unvollständig und/oder falsch sind.

Erfindungsgemäß wird diese Aufgabe gelöst durch ein Sanitärtechnikdiagnosesystem, umfassend wenigstens eine Sanitäreinrichtung, eine Nutzereinrichtung, eine Servereinrichtung sowie eine Diagnoseeinrichtung. Die Nutzereinrichtung ist dazu eingerichtet, mit einem Identifizierer der wenigstens einen Sanitäreinrichtung verknüpfte Geräteinformationen von der wenigstens einen Sanitäreinrichtung anzufordern und zu empfangen, eine Servicenummer zu generieren, einen die Servicenummer und die empfangenen Geräteinformationen umfassenden Datensatz an die Servereinrichtung zu senden und eine die Servicenummer umfassende Benachrichtigung zu versenden. Ferner ist die Servereinrichtung dazu eingerichtet, den Datensatz zu empfangen und abzuspeichern. Die Diagnoseeinrichtung ist hingegen dazu eingerichtet, die Benachrichtigung zu empfangen und unter Nutzung der Servicenummer den Datensatz von der Servereinrichtung anzufordern und zu empfangen.

Als Nutzereinrichtung kann vorliegend ein mobiles Endgerät, zum Beispiel das Smartphone, eines Nutzers betrachtet werden, wobei hingegen als Servereinrichtung eine über das Internet erreichbare Infrastruktur, beispielsweise eine so genannte Cloud-Infrastruktur, angesehen werden kann. Die Diagnoseeinrichtung hingegen kann durch ein Endgerät eines Kundendienstmitarbeiters, beispielsweise durch einen Computer, ein Tablet oder dergleichen, realisiert sein und eine entsprechende Software verwenden (z.B. eine "Service WebApp").

Der vorstehenden Lösung liegt die Erkenntnis zu Grunde, dass aufgrund der Speicherung eines Identifizierers der wenigstens einen Sanitäreinrichtung zusammen mit einer Servicenummer eine eindeutige Zuordnung eines von einem Nutzer bemängelten Problems in Bezug auf ein Produkt vorgenommen werden kann. Da in einem entsprechenden Datensatz zudem die von der wenigstens einen Sanitäreinrichtung empfangenen Geräteinformationen gespeichert sind, ist es der einem Kundendienstmitarbeiter zugeordneten Diagnoseeinrichtung möglich, Hinweise auf das Problem mit der wenigstens einen Sanitäreinrichtung zu ermitteln. Demnach wird eine objektive Sichtweise auf den aktuellen problematischen Zustand der wenigstens einen Sanitäreinrichtung, aufgrund des übermittelten Identifizierers und der übermittelten Geräteinformationen, welche beispielsweise Fehlercodes oder Eventlogs umfassen können, mittels derer Rückschlüsse auf die Ursache für das Fehlverhalten einer Sanitäreinrichtung gezogen oder Topologiefehler erkannt werden können, gegeben.

Besonders vorteilhaft an der vorgeschlagenen Lösung ist, dass aufgrund einer lokalen Verbindung von Nutzereinrichtung und der wenigstens einen Sanitäreinrichtung auch Informationen zu Produkten übermittelt werden können, welche über keinen eigenen Zugang zum Internet verfügen. Dies ist beispielsweise für Produkte der Fall, welche lediglich per Bluetooth kommunizieren können.

Vorteilhafterweise ist die Diagnoseeinrichtung ferner dazu eingerichtet, für die wenigstens eine Sanitäreinrichtung eine Konfiguration zu erstellen und zur Speicherung an die Servereinrichtung zu senden. Das Bereitstellen der Konfiguration mittels Servereinrichtung hat den Vorteil, dass ein Nutzer mit der Nutzereinrichtung zeitlich unabhängig auf die gespeicherte Konfiguration zugreifen kann. Ein Zugriff der Nutzereinrichtung auf die mittels Servereinrichtung gespeicherte Konfiguration, welche auch eine Firmware-Aktualisierung für die wenigstens eine Sanitäreinrichtung umfassen kann, erfolgt beispielsweise mittels einer entsprechenden auf einem Smartphone installierten Applikation (z.B. eine "Control App").

Vorzugsweise ist die Nutzereinrichtung ferner dazu eingerichtet, die Konfiguration von der Servereinrichtung anzufordern und zu empfangen und, vorzugsweise in Abhängigkeit einer Nutzereingabe, an die wenigstens eine Sanitäreinrichtung zu senden. Die lediglich nach Zustimmung eines Nutzers erfolgende Übermittlung der Konfiguration an die wenigstens eine Sanitäreinrichtung hat den Vorteil, dass seitens eines Kundendienstmitarbeiters vorgeschlagene Änderungen nicht zwingend akzeptiert werden müssen. Des Weiteren kann der Nutzer auf diese Weise den Zeitpunkt des Sendens der Konfiguration an die wenigstens eine Sanitäreinrichtung bestimmen, so dass beispielsweise eine während des Aufspielens der Konfiguration auf die wenigstens eine Sanitäreinrichtung gegebene Unbenutzbarkeit berücksichtigt werden kann.

In einer bevorzugten Ausgestaltung umfassen die empfangenen Geräteinformationen wenigstens einen Fehlercode betreffend die wenigstens eine Sanitäreinrichtung. Mittels eines Fehlercodes ist es der Diagnoseeinrichtung möglich, die Ursachen eines Fehlerverhaltens bzw. Problems der wenigstens einen Sanitäreinrichtung schnell und zuverlässig zu identifizieren. Seitens der Diagnoseeinrichtung kann hierzu eine Datenbank sämtlicher Fehlercodes für eine Vielzahl unterschiedlicher Sanitäreinrichtungen vorgehalten sein.

Vorteilhafterweise umfassen die empfangenen Geräteinformationen wenigstens eine Logdatei betreffend die wenigstens eine Sanitäreinrichtung. Logdateien ermöglichen eine Auswertung dahingehend wie eine Nutzung der wenigstens einen Sanitäreinrichtung erfolgte, wodurch möglich Fehlerursachen identifizierbar sind.

Vorzugsweise beinhaltet der die Geräteinformationen umfassende Datensatz ferner eine Fehlerbeschreibung. Eine solche Fehlerbeschreibung kann nach Aufforderung der Nutzereinrichtung mittels entsprechender Eingabemittel von einem Nutzer bereitgestellt werden und kann bei der Identifikation eines Problems helfen. Seitens der Diagnoseeinrichtung kann eine Auswertung der bereitgestellten Fehlerbeschreibung durch einen Kundendienstmitarbeiter und/oder computergestützt, beispielsweise durch eine KIgestützte Texterkennung, erfolgen.

In einer bevorzugten Ausgestaltung ist die Nutzereinrichtung dazu eingerichtet, die die Servicenummer umfassende Benachrichtigung an die Servereinrichtung und/oder an die Diagnoseeinrichtung zu senden. Ein direktes Senden an die Diagnoseeinrichtung, welche beispielsweise per E-Mail, Messenger-Dienst, SMS oder dergleichen erfolgen kann, hat den Vorteil, dass zeitliche Verzögerungen minimiert werden. Ein Senden an die Servereinrichtung hingegen ist vorteilhaft, wenn die Diagnoseeinrichtung gemäß eines sogenannten Publish-Subscribe-Verfahrens arbeitet. Es kann auch vorgesehen sein, die Benachrichtigung über beide der vorgenannten Varianten zu versenden, um eine Redundanz zu schaffen.

Vorteilhafterweise ist die Diagnoseeinrichtung für den Fall des Sendens der Benachrichtigung an die Servereinrichtung dazu eingerichtet, die Servereinrichtung auf das Vorhandensein der Benachrichtigung zu überprüfen. Eine Überprüfung kann dabei im Rahmen des vorgenannten Publish-Subscribe-Verfahrens erfolgen, wobei die Servereinrichtung einen Publisher und die Diagnoseeinrichtung einen Subscriber darstellt.

Vorzugsweise ist die Diagnoseeinrichtung ferner dazu eingerichtet, eine weitere Benachrichtigung an die Nutzereinrichtung zu senden. Diese weitere Benachrichtigung kann beispielsweise durch einen Kundendienstmitarbeiter initiiert worden sein und einem Nutzer mitteilen, dass das von diesem gemeldete Problem derzeit analysiert wird. Die weitere Benachrichtigung kann ebenfalls direkt von der Diagnoseeinrichtung an die Nutzereinrichtung gesendet werden, beispielsweise per E-Mail, Messenger-Dienst, SMS oder dergleichen, und/oder an die Servereinrichtung, von welcher die Nutzereinrichtung selbige abruft, beispielsweise im Rahmen eines Publish-Subscribe-Verfahrens.

In einer bevorzugten Ausgestaltung ist eine Kommunikation zwischen der wenigstens einen Sanitäreinrichtung und der Nutzereinrichtung drahtlos mittels Bluetooth vorgesehen. Dies hat den Vorteil, dass eine erhöhte Sicherheit gewährleistet werden kann, da die wenigstens eine Sanitäreinrichtung nicht direkt per Internet erreichbar und daher vor potenziellen Angreifern geschützt ist. Es kann demnach vorgesehen sein, dass lediglich mit der wenigstens einen Sanitäreinrichtung zuvor lokal gekoppelte Nutzereinrichtungen einen Zugriff vornehmen können.

Vorteilhafterweise ist eine Kommunikation zwischen der wenigstens einen Sanitäreinrichtung und der Nutzereinrichtung mittels eines Gateways vorgesehen, wobei eine Kommunikation zwischen der wenigstens einen Sanitäreinrichtung und dem Gateway drahtlos, vorzugsweise per Bluetooth, oder drahtgebunden und eine Kommunikation zwischen dem Gateway und der Nutzereinrichtung drahtlos mittels Bluetooth vorgesehen ist. Die Nutzung eines Gateways, welches der wenigstens einen Sanitäreinrichtung und der Nutzereinrichtung zwischengeschaltet ist, hat den Vorteil, dass die Sicherheit weiter erhöht werden kann, da mögliche Angreifer zunächst das Gateway überwinden müssen, um Zugriff auf die wenigstens eine Sanitäreinrichtung zu erhalten. Des Weiteren kann mittels eines Gateways eine Vielzahl von Sanitäreinrichtungen verwaltet werden, so dass die Nutzereinrichtung zur Informationsbeschaffung lediglich das Gateway instruieren muss, anstatt mit jeder einzelnen der Sanitäreinrichtungen selbst eine Kommunikation durchführen zu müssen.

Vorzugsweise sind ausschließlich die Nutzereinrichtung, die Servereinrichtung, und die Diagnoseeinrichtung dazu eingerichtet, eine direkte Verbindung mit dem Internet herzustellen.

Mit anderen Worten sind die wenigstens eine Sanitäreinrichtung und das Gateway ausschließlich lokal via Nutzereinrichtung erreichbar.

Des Weiteren wird die vorgenannte Aufgabe erfindungsgemäß gelöst durch ein Sanitärtechnikdiagnoseverfahren umfassend die folgenden Verfahrensschritte: Anfordern und Empfangen von mit einem Identifizierer wenigstens einer Sanitäreinrichtung verknüpften Geräteinformationen von der wenigstens einen Sanitäreinrichtung durch eine Nutzereinrichtung, Generieren einer Servicenummer durch die Nutzereinrichtung, Senden eines die Servicenummer und die Geräteinformationen umfassenden Datensatzes an eine Servereinrichtung durch die Nutzereinrichtung, Abspeichern des empfangenen Datensatzes durch die Servereinrichtung, Versenden einer die Servicenummer umfassenden Benachrichtigung durch die Nutzereinrichtung, Empfangen der Benachrichtigung durch die Diagnoseeinrichtung, und Anfordern und Empfangen des Datensatzes von der Servereinrichtung unter Nutzung der Servicenummer durch die Diagnoseeinrichtung.

Vorteilhafterweise umfasst das Verfahren ferner ein Erstellen einer Konfiguration für die wenigstens eine Sanitäreinrichtung durch die Diagnoseeinrichtung und ein Senden der Konfiguration zur Speicherung an die Servereinrichtung durch die Diagnoseeinrichtung. Mittels einer seitens der Diagnoseeinrichtung erstellten Konfiguration kann das von einem Nutzer gemeldete Problem potenziell gelöst werden.

Vorzugsweise umfasst das Verfahren des Weiteren ein Anfordern und Empfangen der Konfiguration von der Servereinrichtung durch die Nutzereinrichtung und ein Senden der Konfiguration an die wenigstens eine Sanitäreinrichtung, vorzugsweise in Abhängigkeit einer Nutzereingabe. Wie vorstehend erläutert, hat eine vom Nutzer erforderliche Zustimmung den Vorteil, dass seitens eines Kundendienstmitarbeiters vorgeschlagene Änderungen nicht zwingend akzeptiert werden müssen und der Nutzer den Zeitpunkt des Sendens der Konfiguration an die wenigstens eine Sanitäreinrichtung bestimmen kann.

Weitere Einzelheiten, Merkmale und Vorteile der Erfindung werden anhand der nachfolgenden Ausführungsbeispiele näher erläutert.

Dabei zeigen:
- Fig. 1: in einem schematischen Blockdiagramm ein Ausführungsbeispiel eines erfindungsgemäßen Sanitärtechnikdiagnosesystems;
- Fig. 2: in einem Ablaufdiagramm ein Ausführungsbeispiel von innerhalb des erfindungsgemäßen Sanitärtechnikdiagnosesystems vorgesehener Schritte; und
- Fig. 3: in einem schematischen Blockdiagramm ein Ausführungsbeispiel für Kommunikationswege zwischen mehreren Sanitäreinrichtungen und einer Nutzereinrichtung innerhalb des erfindungsgemäßen Sanitärtechnikdiagnosesystems.

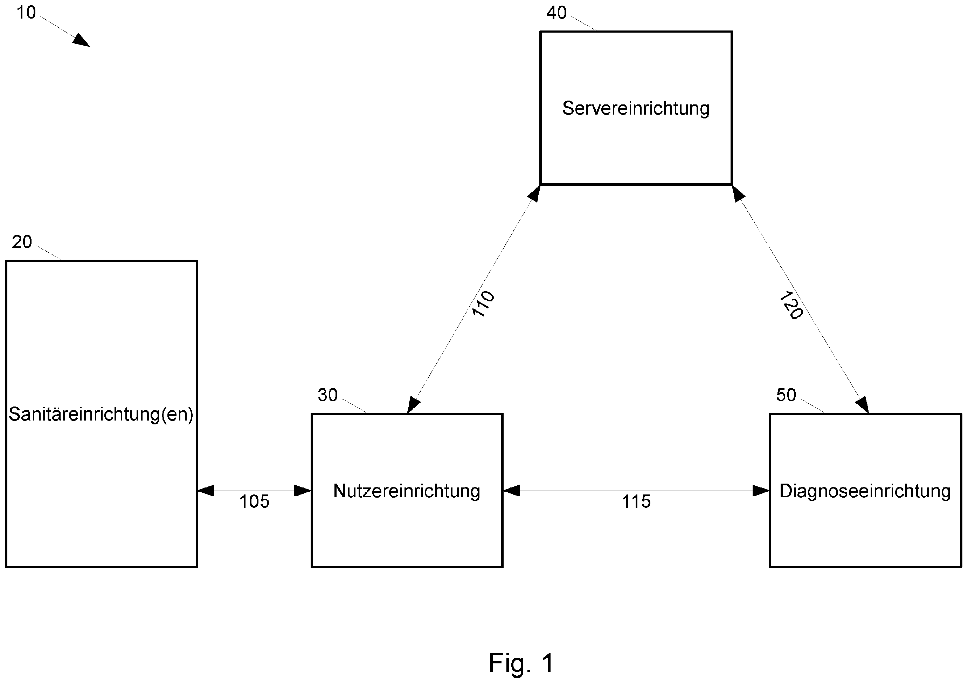

Fig. 1 zeigt ein Ausführungsbeispiel eines erfindungsgemäßen Sanitärtechnikdiagnosesystems 10, welches vorliegend wenigstens eine Sanitäreinrichtung 20, eine Nutzereinrichtung 30, eine Servereinrichtung 40, sowie eine Diagnoseeinrichtung 50 umfasst.

Die wenigstens eine Sanitäreinrichtung 20 ist mit der Nutzereinrichtung 30 über einen Kommunikationsweg 105 verbunden. Eine entsprechende Kommunikation erfolgt vorzugsweise drahtlos, beispielsweise per Bluetooth. Die vorliegende Offenbarung ist jedoch nicht darauf beschränkt, so dass auch andere Kommunikationsmöglichkeiten wie beispielsweise via ZigBee, WLAN, Matter (zuvor Project Connected Home over IP, CHIP) und dergleichen vorgesehen sein können.

Die Nutzereinrichtung 30 verfügt des Weiteren über einen Kommunikationsweg 110 zur Servereinrichtung 40. Dieser Kommunikationsweg 110 kann beispielsweise eine Datenverbindung gemäß 3G/UMTS, 4G/LTE und/oder 5G/NR darstellen oder eine Datenverbindung via WLAN-Kommunikation. Die Servereinrichtung 40 wird beispielsweise von einem Hersteller der wenigstens einen Sanitäreinrichtung 20 betrieben und ist über das Internet erreichbar.

Des Weiteren ist die Nutzereinrichtung 30 über den Kommunikationsweg 115 direkt mit der Diagnoseeinrichtung 50 verbunden. Der Kommunikationsweg 115 kann beispielsweise als Datenverbindung unter Nutzung von E-Mail oder eines Messenger-Dienstes realisiert sein oder per SMS über ein 2G/GSM-Mobilfunknetz.

Die Diagnoseeinrichtung 50 ist ferner über einen Kommunikationsweg 120 mit der Servereinrichtung 40 verbunden, welcher eine Datenverbindung ermöglicht. Da die Servereinrichtung 40 und die Diagnoseeinrichtung 50 vorzugsweise beide in einem vom Hersteller der wenigstens einen Sanitäreinrichtung 20 betriebenen Netz angeordnet sind, kann hierzu eine LAN-Verbindung vorgesehen sein. Die vorliegende Offenbarung ist hierauf jedoch nicht beschränkt, so dass auch andere Verbindungsmöglichkeiten gegeben sein können, insbesondere wenn Servereinrichtung 40 und Diagnoseeinrichtung 50 nicht in örtlicher Nähe zueinander angeordnet sind.

Mittels der Kommunikationswege 110 und 120 wird von der Nutzereinrichtung 30 ein Datensatz an die Diagnoseeinrichtung 50 übermittelt, welcher eine von der Nutzereinrichtung 30 generierte Servicenummer und von der wenigstens einen Sanitäreinrichtung 20 empfangene Geräteinformationen umfasst. Der Datensatz kann ferner eine Kunden-ID umfassen, welche die Nutzereinrichtung 30 bereitstellt. Eine solche Kunden-ID wird beispielsweise generiert, wenn ein Nutzer eines als Nutzereinrichtung 30 fungierenden Smartphones sich in einer entsprechenden drauf installierten Applikation registriert, welche der Kommunikation mit der wenigstens einen Sanitäreinrichtung 20 und der Servereinrichtung 40 dient. Bei einer Registrierung gibt der Nutzer persönliche Informationen an, wie beispielsweise Name, Anschrift, Telefonnummer und E-Mail-Adresse.

Der Kommunikationsweg 115 hingegen ist ausschließlich dafür vorgesehen, Benachrichtigungen zwischen Nutzereinrichtung 30 und Diagnoseeinrichtung 50 auszutauschen, beispielsweise eine an die Diagnoseeinrichtung 50 gerichtete Benachrichtigung, dass ein Servicefall bzw. eine Serviceanfrage betreffend ein Problem mit der wenigstens einen Sanitäreinrichtung 20 in der Servereinrichtung 40 gespeichert wurde oder aber eine an die Nutzereinrichtung 30 gerichtete Benachrichtigung, dass sich der vorgenannte Servicefall in Bearbeitung befindet.

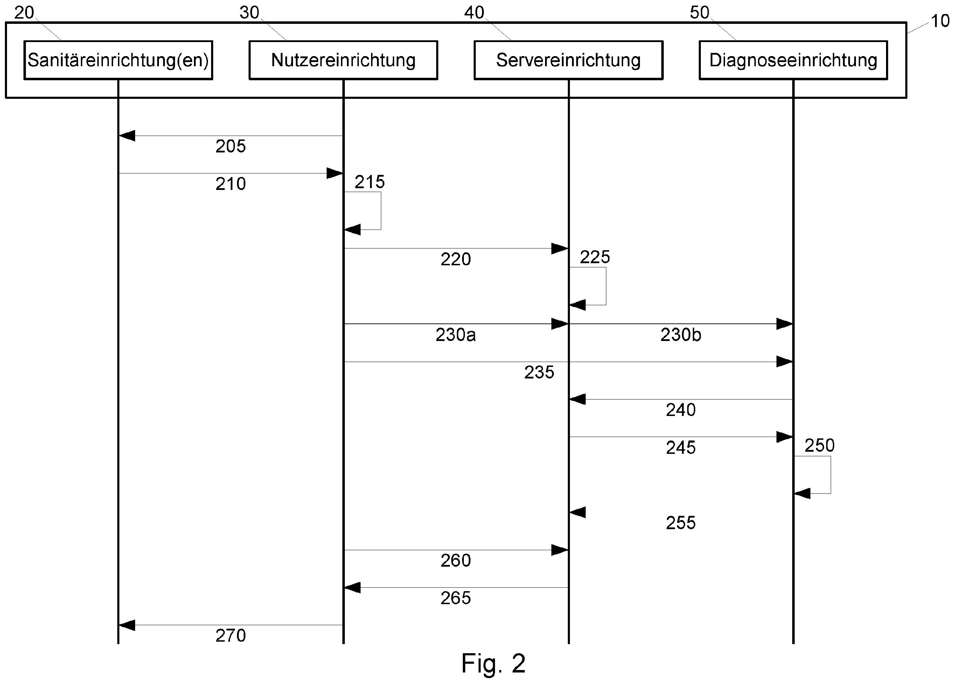

Fig. 2 zeigt ein Ausführungsbeispiel von Verfahrensschritten, welche zwischen den Einrichtungen des erfindungsgemäßen Sanitärtechnikdiagnosesystems 10 ausgeführt werden können. Zunächst fordert eine Nutzereinrichtung 30 in Schritt 205 von wenigstens einer Sanitäreinrichtung 20 mit einem Identifizierer der wenigstens einen Sanitäreinrichtung 20 verknüpfte Geräteinformationen an. Die Anforderung kann beispielsweise mittels einer Applikation ausgelöst werden, welche auf einem als Nutzereinrichtung 30 fungierenden Smartphone installiert ist. Dies kann erfolgen, nachdem ein Nutzer ein Problem mit der wenigstens einen Sanitäreinrichtung 20 festgestellt hat, woraufhin eine Nutzereingabe zur Auswahl der wenigstens einen Sanitäreinrichtung 20 erfolgte.

Anschließend werden die Geräteinformationen von der wenigstens einen Sanitäreinrichtung 20, welche mit dem Identifizierer der wenigstens einen Sanitäreinrichtung 20 verknüpft sind, seitens der Nutzereinrichtung 30 in Schritt 210 empfangen. Dabei werden, sofern der Nutzer mehr als eine Sanitäreinrichtung 20 ausgewählt hat, die Geräteinformationen jeder ausgewählten Sanitäreinrichtung 20 zusammen mit dem entsprechenden Identifizierer empfangen.

Daraufhin generiert die Nutzereinrichtung 30 in Schritt 215 eine Servicenummer. Dieser Schritt hat nicht zwangsläufig nach Empfang der Geräteinformationen zu erfolgen, sondern kann dem Empfang der Geräteinformationen auch vorausgehen.

Sobald die empfangenen Geräteinformationen und die generierte Servicenummer vorliegen, erzeugt die Nutzereinrichtung einen Datensatz und sendet diesen in Schritt 220 an eine Servereinrichtung 40, welche beispielsweise vom Hersteller der wenigstens einen Sanitäreinrichtung 20 betrieben wird. Sofern Geräteinformationen mehrerer Sanitäreinrichtungen 20 empfangen wurden, enthält der Datensatz sämtliche dieser Geräteinformationen mit einer Zuordnung zu einem entsprechenden Identifizierer der jeweiligen Sanitäreinrichtung 20. Die Geräteinformationen können einen oder mehrere Fehlercodes betreffend eine jeweilige Sanitäreinrichtung 20 und/oder wenigstens eine Logdatei betreffend eine jeweilige Sanitäreinrichtung 20 umfassen. Zusätzlich kann in dem Datensatz eine Fehlerbeschreibung vorhanden sein, welche auf Basis einer entsprechenden von der Nutzereinrichtung 30 empfangenen Nutzereingabe ergänzt wird. Eine solche Fehlerbeschreibung erfolgt in Textform und spiegelt ein vom Nutzer der Nutzereinrichtung 30 erfahrenes Problem mit der wenigsten einen Sanitäreinrichtung 20 in den Worten des Nutzers wider. Des Weiteren kann vorgesehen sein, dass vom Nutzer der Nutzereinrichtung 30 erfasste multimediale Inhalte wie Bilder und/oder Videos die Fehlerbeschreibung ergänzen. Der in Schritt 220 an die Servereinrichtung 40 versendete Datensatz kann ferner eine Kunden-ID umfassen, welche einem Nutzer im Rahmen einer Registrierung zugeordnet wurde.

In Schritt 225 wird der Datensatz von der Servereinrichtung 40 empfangen und abgespeichert. Demnach sind die ein Problem betreffenden Informationen nunmehr in einer über das Internet erreichbaren Infrastruktur, beispielsweise einer so genannte Cloud-Infrastruktur, gespeichert.

Damit eine Diagnoseeinrichtung 50 über das Vorliegen eines entsprechenden neuen Servicefalls informiert wird, ist in Schritt 230a bzw. 235 vorgesehen, dass die Nutzereinrichtung 30 eine die Servicenummer umfassende Benachrichtigung versendet. Dabei ist sowohl ein direkter Versand einer Benachrichtigung von der Nutzereinrichtung 30 an die Diagnoseeinrichtung 50 gemäß Schritt 235 möglich, beispielsweise per E-Mail, als auch ein Versand einer Benachrichtigung an die Servereinrichtung 40 gemäß Schritt 230a und eine sich daran anschließende Übermittlung der Benachrichtigung von der Servereinrichtung 40 an die Diagnoseeinrichtung 50 gemäß Schritt 230b. Letztere Variante kann als Publish-Subscribe-Verfahren ausgebildet sein, bei welchem die Servereinrichtung 40 Publisher und die Diagnoseeinrichtung 50 Subscriber ist.

In jedem Fall empfängt die Diagnoseeinrichtung 50 anschließend in Schritt 230b bzw. 235 die Benachrichtigung, so dass ein die Diagnoseeinrichtung 50 betätigender Kundendienstmitarbeiter über das Vorliegen eines neuen Servicefalls bzw. einer neuen Serviceanfrage informiert wird.

Unter Nutzung der Servicenummer wird in Schritt 240 der Datensatz von der Servereinrichtung 40 angefordert und in Schritt 245 seitens der Diagnoseeinrichtung 50 empfangen. Dies kann mit und ohne Zutun eines Kundendienstmitarbeiters erfolgen. Anschließend ist die Diagnoseeinrichtung 50 dazu in die Lage versetzt, das vom Nutzer gemeldete Problem zu analysieren. Eine entsprechende Analyse kann sowohl vollautomatisch erfolgen, indem in dem Datensatz vorhandene Fehlercodes mit einer Fehlercodes und entsprechende Problemlösungen aufweisenden Datenbank abgeglichen werden, oder indem ein Kundendienstmitarbeiter zumindest teilweise Analysevorgänge durchführt.

Anschließend wird seitens der Diagnoseeinrichtung 50 in Schritt 250 für die wenigstens eine Sanitäreinrichtung 20 eine Konfiguration erstellt und in Schritt 255 zur Speicherung an die Servereinrichtung 40 gesendet. Eine Konfiguration kann dabei sowohl Instruktionen zur Konfiguration lediglich einer Sanitäreinrichtung 20 als auch Instruktionen zur Konfiguration mehrerer Sanitäreinrichtung 20 umfassen, wobei die entsprechenden Instruktionen mittels Identifizierer der jeweiligen Sanitäreinrichtung 20 zugeordnet sind. Die Konfiguration ist nach Abschluss des vorgenannten Schrittes auf der Servereinrichtung gespeichert.

Die Nutzereinrichtung 30 ist ferner dazu eingerichtet, die Konfiguration von der Servereinrichtung 40 in Schritt 260 anzufordern und in Schritt 265 zu empfangen. Wird beispielsweise als Nutzereinrichtung 30 ein Smartphone mit einer entsprechenden Applikation genutzt, so kann die Applikation nach Starten selbiger prüfen, ob die Servereinrichtung 40 eine Konfiguration bereithält. Zur Identifikation dieser Konfiguration dient abermals die Servicenummer, welche dem Servicefall bzw. der Serviceanfrage bereits zugeordnet sind. Diese beiden Schritte können beispielsweise initiiert werden, nachdem die Nutzereinrichtung 30 von der Diagnoseeinrichtung 50 über eine vollständige Bearbeitung eines Servicefalls benachrichtigt wurde (in Fig. 2 nicht dargestellt).

In Schritt 270 wird die Konfiguration von der Nutzereinrichtung an die wenigstens eine Sanitäreinrichtung 20 gesendet. Ein Senden erfolgt dabei beispielsweise in Abhängigkeit einer Nutzereingabe, mittels welcher ein Nutzer die vorgeschlagene Konfiguration annimmt. Lehnt der Nutzer die vorgeschlagene Konfiguration hingegen ab, erfolgt in Schritt 270 keine Übermittlung an die wenigstens eine Sanitäreinrichtung 20.

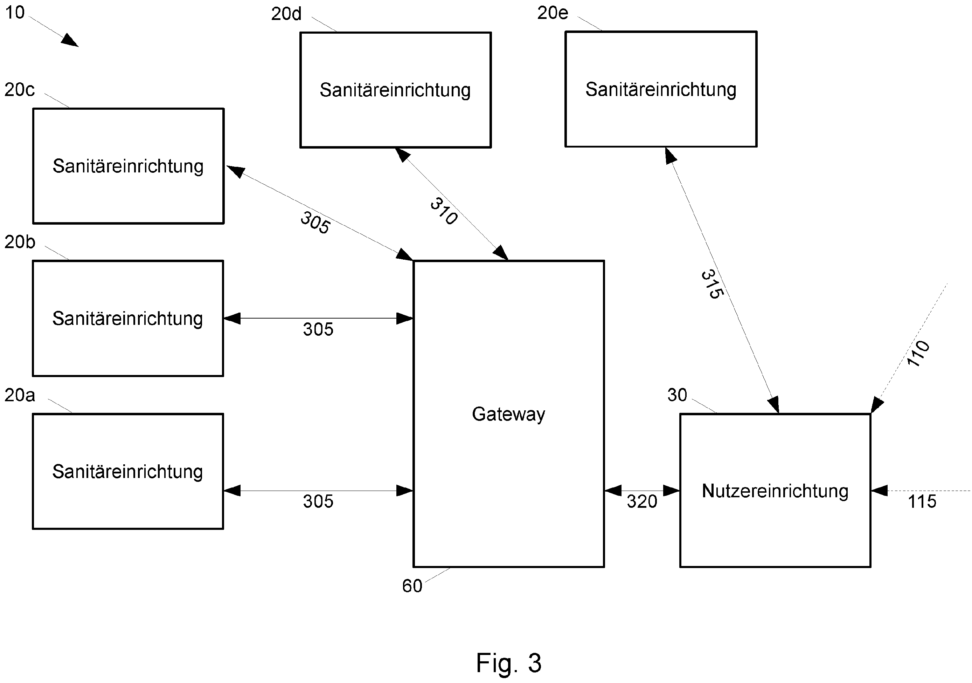

Fig. 3 zeigt ein weiteres Ausführungsbeispiel für Kommunikationswege zwischen mehreren Sanitäreinrichtungen 20 und einer Nutzereinrichtung 30 innerhalb des erfindungsgemäßen Sanitärtechnikdiagnosesystems 10. Fig. 3 kann als Ausschnitt bzw. Ergänzung von Fig. 1 angesehen werden, was anhand der angedeuteten Kommunikationswege 110 und 115 ersichtlich ist.

Vorliegend sind fünf Sanitäreinrichtungen 20a - 20e Bestandteil des Systems 10, wobei diese auf unterschiedliche Art und Weise mit der Nutzereinrichtung 30 kommunikativ verbunden sind.

Die Sanitäreinrichtungen 20a, 20b und 20c sind mittels Kommunikationsweg 305 mit einem Gateway 60 verbunden, wobei dieser Kommunikationsweg 305 eine drahtlose Bluetooth-Verbindung repräsentiert. Die Sanitäreinrichtung 20d ist ebenfalls mit dem Gateway 60 verbunden, jedoch über einen drahtgebundenen Kommunikationsweges 310, welcher vorliegend in Form einer Ethernet-Verbindung realisiert ist.

Abweichend hiervon ist die Sanitäreinrichtung 20e nicht mit dem Gateway 60 verbunden, sondern verfügt über einen direkten Kommunikationsweg 315 zur Nutzereinrichtung 30, welcher wiederum mittels Bluetooth-Verbindung realisiert ist.

Über den Kommunikationsweg 320 stehen die Nutzereinrichtung 30 und das Gateway 60 kommunikativ in Verbindung, vorliegend ebenfalls per Bluetooth-Verbindung.

Das vorstehende erläuterte System erlaubt die gleichzeitige Nutzung von Sanitäreinrichtungen 20a - 20d, welche nur mittels Gateway 60 eingebunden werden können und einer Sanitäreinrichtung 20e, für welche nur eine Direktverbindung zu einer Nutzereinrichtung 30 möglich ist. Dieses Ausführungsbeispiel ist rein exemplarisch und nicht als beschränkend zu verstehen. Beispielsweise kann ebenfalls vorgesehen sein, dass mehrere Sanitäreinrichtungen 20e direkt, d.h. ohne Gateway 60, mit der Nutzereinrichtung 30 kommunizieren und/oder dass sämtliche Sanitäreinrichtungen über einen Kommunikationsweg 310 gemäß einer drahtgebundenen Verbindung mit dem Gateway 60 verbunden sind.

Die vorstehend beschriebenen Figuren und die im Zusammenhang mit diesen erläuterten Ausführungsbeispiele dienen lediglich einer Erläuterung der Erfindung und sind für die nicht beschränkend.

### Bezugszeichenliste:

- 10: Sanitärtechnikdiagnosesystem
- 20: Sanitäreinrichtung(en)
- 20a - 20e: Sanitäreinrichtung
- 30: Nutzereinrichtung
- 40: Servereinrichtung
- 50: Diagnoseeinrichtung
- 60: Gateway

- 105: Kommunikationsweg Sanitäreinrichtung(en) ↔ Nutzereinrichtung
- 110: Kommunikationsweg Nutzereinrichtung ↔ Servereinrichtung
- 115: Kommunikationsweg Nutzereinrichtung ↔ Diagnoseeinrichtung
- 120: Kommunikationsweg Servereinrichtung ↔ Diagnoseeinrichtung

- 205 - 270: Verfahrensschritt

- 305: Kommunikationsweg Sanitäreinrichtung ↔ Gateway
- 310: Kommunikationsweg Sanitäreinrichtung ↔ Gateway
- 315: Kommunikationsweg Sanitäreinrichtung ↔ Nutzereinrichtung
- 320: Kommunikationsweg Gateway ↔ Nutzereinrichtung

## Patentansprüche

1. Sanitärtechnikdiagnosesystem (10), umfassend wenigstens eine Sanitäreinrichtung (20), eine Nutzereinrichtung (30), eine Servereinrichtung (40), sowie eine Diagnoseeinrichtung (50),
wobei die Nutzereinrichtung (30) dazu eingerichtet ist,
mit einem Identifizierer der wenigstens einen Sanitäreinrichtung (20) verknüpfte Geräteinformationen von der wenigstens einen Sanitäreinrichtung (20) anzufordern (205) und zu empfangen (210),
eine Servicenummer zu generieren (215),
einen die Servicenummer und die empfangenen Geräteinformationen umfassenden Datensatz an die Servereinrichtung (40) zu senden (220), und eine die Servicenummer umfassende Benachrichtigung zu versenden (230a, 235),
wobei die Servereinrichtung (40) dazu eingerichtet ist,
den Datensatz zu empfangen und abzuspeichern (225),
wobei die Diagnoseeinrichtung (50) dazu eingerichtet ist,
die Benachrichtigung zu empfangen (230b, 235), und
unter Nutzung der Servicenummer den Datensatz von der Servereinrichtung (40) anzufordern (240) und zu empfangen (245).

2. System (10) nach Anspruch 1, wobei die Diagnoseeinrichtung (50) ferner dazu eingerichtet ist, für die wenigstens eine Sanitäreinrichtung (20) eine Konfiguration zu erstellen (250) und zur Speicherung an die Servereinrichtung (40) zu senden (255).

3. System (10) nach Anspruch 2, wobei die Nutzereinrichtung (30) ferner dazu eingerichtet ist, die Konfiguration von der Servereinrichtung (40) anzufordern (260) und zu empfangen (265) und an die wenigstens eine Sanitäreinrichtung (20) zu senden (270), vorzugsweise in Abhängigkeit einer Nutzereingabe.

4. System (10) nach einem der Ansprüche 1 bis 3, wobei die empfangenen Geräteinformationen wenigstens einen Fehlercode betreffend die wenigstens eine Sanitäreinrichtung (20) umfassen.

5. System (10) nach einem der Ansprüche 1 bis 4, wobei die empfangenen Geräteinformationen wenigstens eine Logdatei betreffend die wenigstens eine Sanitäreinrichtung (20) umfassen.

6. System (10) nach einem der Ansprüche 1 bis 5, wobei der die Geräteinformationen umfassende Datensatz ferner eine Fehlerbeschreibung beinhaltet.

7. System (10) nach einem der Ansprüche 1 bis 6, wobei die Nutzereinrichtung (30) dazu eingerichtet ist, die die Servicenummer umfassende Benachrichtigung an die Servereinrichtung (40) und/oder an die Diagnoseeinrichtung (50) zu senden.

8. System (10) nach Anspruch 7, wobei die Diagnoseeinrichtung (50) für den Fall des Sendens der Benachrichtigung an die Servereinrichtung (40) dazu eingerichtet ist, die Servereinrichtung (40) auf das Vorhandensein der Benachrichtigung zu überprüfen.

9. System (10) nach einem der Ansprüche 1 bis 8, wobei die Diagnoseeinrichtung (50) ferner dazu eingerichtet ist, eine weitere Benachrichtigung an die Nutzereinrichtung (30) zu senden.

10. System (10) nach einem der Ansprüche 1 bis 9, wobei eine Kommunikation zwischen der wenigstens einen Sanitäreinrichtung (20) und der Nutzereinrichtung (30) drahtlos mittels Bluetooth vorgesehen ist.

11. System (10) nach einem der Ansprüche 1 bis 10, wobei eine Kommunikation zwischen der wenigstens einen Sanitäreinrichtung (20) und der Nutzereinrichtung (30) mittels eines Gateways vorgesehen ist, wobei eine Kommunikation zwischen der wenigstens einen Sanitäreinrichtung (20) und dem Gateway drahtlos, vorzugsweise per Bluetooth, oder drahtgebunden und eine Kommunikation zwischen dem Gateway und der Nutzereinrichtung (30) drahtlos mittels Bluetooth vorgesehen ist.

12. System (10) nach einem der Ansprüche 1 bis 11, wobei ausschließlich die Nutzereinrichtung (30), die Servereinrichtung (40), und die Diagnoseeinrichtung (50) dazu eingerichtet sind, eine direkte Verbindung mit dem Internet herzustellen.

13. Sanitärtechnikdiagnoseverfahren umfassend die Verfahrensschritte:
Anfordern (205) und Empfangen (210) von mit einem Identifizierer wenigstens einer Sanitäreinrichtung (20) verknüpften Geräteinformationen von der wenigstens einen Sanitäreinrichtung (20) durch eine Nutzereinrichtung (30),
Generieren (215) einer Servicenummer durch die Nutzereinrichtung (30),
Senden (220) eines die Servicenummer und die Geräteinformationen umfassenden Datensatzes an eine Servereinrichtung (40) durch die Nutzereinrichtung (30),
Abspeichern (225) des empfangenen Datensatzes durch die Servereinrichtung (40),
Versenden (230a, 235) einer die Servicenummer umfassenden Benachrichtigung durch die Nutzereinrichtung (30),
Empfangen (230b, 235) der Benachrichtigung durch die Diagnoseeinrichtung (50), und
Anfordern (240) und Empfangen (245) des Datensatzes von der Servereinrichtung (40) unter Nutzung der Servicenummer durch die Diagnoseeinrichtung (50).

14. Verfahren nach Anspruch 13, ferner umfassend:
Erstellen (250) einer Konfiguration für die wenigstens eine Sanitäreinrichtung (20) durch die Diagnoseeinrichtung (50), und
Senden (255) der Konfiguration zur Speicherung an die Servereinrichtung (40) durch die Diagnoseeinrichtung (50).

15. Verfahren nach Anspruch 14, ferner umfassend:
Anfordern (260) und Empfangen (265) der Konfiguration von der Servereinrichtung (40) durch die Nutzereinrichtung (30), und
Senden (270) der Konfiguration an die wenigstens eine Sanitäreinrichtung (20), vorzugsweise in Abhängigkeit einer Nutzereingabe.

## Claims

1. Sanitary engineering diagnostic system (10), comprising at least one sanitary device (20), a user device (30), a server device (40) and a diagnostic device (50),
wherein the user device (30) is configured to
request (205) and receive (210) device information associated with an identifier of the at least one sanitary device (20) from the at least one sanitary device (20),
generate (215) a service number,
send (220) a data record comprising the service number and the received device information to the server device (40), and
send (230a, 235) a notification comprising the service number,
wherein the server device (40) is configured to
receive and store (225) the data record,
wherein the diagnostic device (50) is configured to
receive (230b, 235) the notification, and
request (240) and receive (245) the data record from the server device (40) using the service number.

2. System (10) according to claim 1, wherein the diagnostic device (50) is further configured to generate (250) a configuration for the at least one sanitary device (20) and to send (255) the configuration to the server device (40) for storage.

3. System (10) according to claim 2, wherein the user device (30) is further configured to request (260) and receive (265) the configuration from the server device (40) and to send (270) it to the at least one sanitary device (20), preferably as a function of a user input.

4. System (10) according to any one of claims 1 to 3, wherein the received device information comprises at least one error code relating to the at least one sanitary device (20).

5. System (10) according to any one of claims 1 to 4, wherein the received device information comprises at least one log file relating to the at least one sanitary device (20).

6. System (10) according to any one of claims 1 to 5, wherein the data record comprising the device information further includes an error description.

7. System (10) according to any one of claims 1 to 6, wherein the user device (30) is configured to send the notification comprising the service number to the server device (40) and/or to the diagnostic device (50).

8. System (10) according to claim 7, wherein, in the case of the notification being sent to the server device (40), the diagnostic device (50) is configured to check the server device (40) for the presence of the notification.

9. System (10) according to any one of claims 1 to 8, wherein the diagnostic device (50) is further configured to send a further notification to the user device (30).

10. System (10) according to any one of claims 1 to 9, wherein communication between the at least one sanitary device (20) and the user device (30) is provided wirelessly by means of Bluetooth.

11. System (10) according to any one of claims 1 to 10, wherein communication between the at least one sanitary device (20) and the user device (30) is provided by means of a gateway, wherein communication between the at least one sanitary device (20) and the gateway is provided wirelessly, preferably via Bluetooth, or in a wired manner, and communication between the gateway and the user device (30) is provided wirelessly by means of Bluetooth.

12. System (10) according to any one of claims 1 to 11, wherein only the user device (30), the server device (40), and the diagnostic device (50) are configured to establish a direct connection to the internet.

13. Sanitary engineering diagnostic method comprising the method steps of:
requesting (205) and receiving (210), by a user device (30), device information associated with an identifier of at least one sanitary device (20) from the at least one sanitary device (20),
generating (215), by the user device (30), a service number,
sending (220), by the user device (30), a data record comprising the service number and the device information to a server device (40),
storing (225), by the server device (40), the received data record,
sending (230a, 235), by the user device (30), a notification comprising the service number,
receiving (230b, 235), by the diagnostic device (50), the notification, and
requesting (240) and receiving (245), by the diagnostic device (50), the data record from the server device (40) using the service number.

14. Method according to claim 13, further comprising:
creating (250), by the diagnostic device (50), a configuration for the at least one sanitary device (20), and
sending (255), by the diagnostic device (50), the configuration to the server device (40) for storage.

15. Method according to claim 14, further comprising:
requesting (260) and receiving (265), by the user device (30), the configuration from the server device (40), and
sending (270) the configuration to the at least one sanitary device (20), preferably as a function of a user input.

## Revendications

1. Système de diagnostic de technique sanitaire (10), comprenant au moins un dispositif sanitaire (20), un dispositif utilisateur (30), un dispositif serveur (40) ainsi qu'un dispositif de diagnostic (50),
le dispositif utilisateur (30) étant configuré pour
demander (205) et recevoir (210) des informations de dispositif associées à un identifiant de l'au moins un dispositif sanitaire (20) en provenance de l'au moins un dispositif sanitaire (20),
générer (215) un numéro de service,
envoyer (220), au dispositif serveur (40), un jeu de données comprenant le numéro de service et les informations de dispositif reçues, et
envoyer (230a, 235) une notification comprenant le numéro de service,
le dispositif serveur (40) étant configuré pour
recevoir et mémoriser (225) le jeu de données,
le dispositif de diagnostic (50) étant configuré pour
recevoir (230b, 235) la notification, et
demander (240) et recevoir (245) le jeu de données en provenance du dispositif serveur (40) en utilisant le numéro de service.

2. Système (10) selon la revendication 1, dans lequel le dispositif de diagnostic (50) est en outre configuré pour créer (250) une configuration pour l'au moins un dispositif sanitaire (20) et pour l'envoyer (255) au dispositif serveur (40) en vue de son stockage.

3. Système (10) selon la revendication 2, dans lequel le dispositif utilisateur (30) est en outre configuré pour demander (260) et recevoir (265) la configuration en provenance du dispositif serveur (40) et pour l'envoyer (270) à l'au moins un dispositif sanitaire (20), de préférence en fonction d'une entrée utilisateur.

4. Système (10) selon l'une des revendications 1 à 3, dans lequel les informations de dispositif reçues comprennent au moins un code d'erreur concernant l'au moins un dispositif sanitaire (20).

5. Système (10) selon l'une des revendications 1 à 4, dans lequel les informations de dispositif reçues comprennent au moins un fichier journal concernant l'au moins un dispositif sanitaire (20).

6. Système (10) selon l'une des revendications 1 à 5, dans lequel le jeu de données comprenant les informations de dispositif comprend en outre une description d'erreur.

7. Système (10) selon l'une des revendications 1 à 6, dans lequel le dispositif utilisateur (30) est configuré pour envoyer la notification comprenant le numéro de service au dispositif serveur (40) et/ou au dispositif de diagnostic (50).

8. Système (10) selon la revendication 7, dans lequel le dispositif de diagnostic (50) est configuré, dans le cas de l'envoi de la notification au dispositif serveur (40), pour vérifier, auprès du dispositif serveur (40), la présence de la notification.

9. Système (10) selon l'une des revendications 1 à 8, dans lequel le dispositif de diagnostic (50) est en outre configuré pour envoyer une autre notification au dispositif utilisateur (30).

10. Système (10) selon l'une des revendications 1 à 9, dans lequel une communication entre l'au moins un dispositif sanitaire (20) et le dispositif utilisateur (30) est prévue sans fil au moyen du Bluetooth.

11. Système (10) selon l'une des revendications 1 à 10, dans lequel une communication entre l'au moins un dispositif sanitaire (20) et le dispositif utilisateur (30) est prévue au moyen d'une passerelle, une communication entre l'au moins un dispositif sanitaire (20) et la passerelle étant prévue sans fil, de préférence par Bluetooth, ou filaire, et une communication entre la passerelle et le dispositif utilisateur (30) étant prévue sans fil au moyen du Bluetooth.

12. Système (10) selon l'une des revendications 1 à 11, dans lequel seuls le dispositif utilisateur (30), le dispositif serveur (40) et le dispositif de diagnostic (50) sont configurés pour établir une connexion directe à Internet.

13. Procédé de diagnostic de technique sanitaire comprenant les étapes de procédé suivantes :
demander (205) et recevoir (210), par un dispositif utilisateur (30), des informations de dispositif associées à un identifiant d'au moins un dispositif sanitaire (20) en provenance de l'au moins un dispositif sanitaire (20),
générer (215), par le dispositif utilisateur (30), un numéro de service,
envoyer (220), par le dispositif utilisateur (30), un jeu de données comprenant le numéro de service et les informations de dispositif à un dispositif serveur (40),
mémoriser (225), par le dispositif serveur (40), le jeu de données reçu,
envoyer (230a, 235), par le dispositif utilisateur (30), une notification comprenant le numéro de service,
recevoir (230b, 235), par le dispositif de diagnostic (50), la notification, et
demander (240) et recevoir (245), par le dispositif de diagnostic (50), le jeu de données en provenance du dispositif serveur (40) en utilisant le numéro de service.

14. Procédé selon la revendication 13, comprenant en outre :
créer (250), par le dispositif de diagnostic (50), une configuration pour l'au moins un dispositif sanitaire (20), et
envoyer (255), par le dispositif de diagnostic (50), la configuration au dispositif serveur (40) en vue de sa mémorisation.

15. Procédé selon la revendication 14, comprenant en outre :
demander (260) et recevoir (265), par le dispositif utilisateur (30), la configuration en provenance du dispositif serveur (40), et
envoyer (270) la configuration à l'au moins un dispositif sanitaire (20), de préférence en fonction d'une entrée utilisateur.
